# EUROPÄISCHE PATENTSCHRIFT

(11) **EP 0 623 835 B1**
(45) Veröffentlichungstag und Bekanntmachung des Hinweises auf die Patenterteilung: **11.06.1997**
(21) Anmeldenummer: 94104808.4
(22) Anmeldetag: 25.03.1994
(51) Int. Cl.: G02B 27/00, G06K 7/10, G01N 21/89

(54) **Verfahren und Anordnung zum Winkeljustieren einer Linienabtastvorrichtung**
Method and device for calibrating an angle of a scanning device for lines
Procédé et dispositif pour ajuster l'angle d'un scanner des lignes

(30) Priorität: 06.05.1993 DE 4315105
(43) Veröffentlichungstag der Anmeldung: 09.11.1994
(73) Patentinhaber: SICK AG, 79183 Waldkirch (DE)
(72) Erfinder: Hippenmeyer, Heinrich, D-79348 Freiamt (DE); Kilian, Reinhold, D-79183 Waldkirch/Brsg. (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 148 138
- EP-A- 0 304 804
- DE-A- 3 046 584
- DE-A- 3 125 449
- DE-A- 3 603 544
- DE-A- 3 821 663
- DE-A- 4 114 925
- DE-A- 4 125 899

## Beschreibung

Die Erfindung betrifft ein Verfahren zum Winkeljustieren einer vorzugsweise um alle Raumachsen einstellbaren, insbesondere optischen Linienabtastvorrichtung nach dem Oberbegriff des Patentanspruchs 1.

Derartige Linienabtastvorrichtungen sind allgemein bekannt (DE-OS 28 27 705, 29 04 432, 29 17 875, 31 25 189, 36 03 544) und werden z. B. dazu verwendet, Codes auf Gegenständen, beispielsweise auf einem laufenden Band transportierten Gepäckstücken zu erfassen, abzutasten und auszuwerten. Eine in der Linienabtastvorrichtung vorgesehene Lichtempfangsanordnung spricht auf das von dem Codesstrichen und Codelücken reflektierte Licht an und gibt an eine elektronische Auswerteschaltung ein entsprechendes elektrisches Signal ab, so daß diese beispielsweise mit Hilfe eines Mikroprozessors den Code identifizieren und ein entsprechendes Erkennungssignal abgeben kann.

Ein Problem bereitet die Justierung derartiger, mit einem Empfänger ausgestatteten Linienabtastvorrichtungen, denn die Codierungen laufen in einem bestimmten Abstand, aber auch in einer bestimmten Höhe und Richtung an der Linienabtastvorrichtung vorbei, so daß eine sichere Erfassung der Codes nur dann gewährleistet ist, wenn eine einwandfreie Ausrichtung der Linienabtastvorrichtung relativ zu der Abtastfläche der abzutastenden Gegenstände vorgenommen wird.

Das Ziel der Erfindung besteht somit darin, ein einfaches Verfahren und eine einfache Linienabtastvorrichtung der eingangs genannten Gattung zu schaffen, welche auch von ungeübten Personen problemlos und sicher ausgeführt bzw. bedient werden können und eine einwandfreie und schnelle Justierung der Linienabtastvorrichtung ermöglichen.

Zur Lösung dieser Aufgabe sieht die Erfindung die Merkmale der Patentansprüche 1 oder 8 vor.

Vorteilhafte Weiterbildungen der Erfindung sind in den Patentansprüchen 2 bis 7 bzw. 9 bis 14 definiert.

Erfindungsgemäß wird also dem eigentlichen Abtast- bzw. Erkennungsvorgang ein Justiervorgang vorangeschaltet, bei dem der Abtastlichtstrahl mitwirkt. Durch die besondere Markierung einer bestimmten Stelle des Abtastlichtstrahls kann auf einfache Weise eine Zuordnung zu einer an eine vorbestimmte Stelle gebrachten Markierung auf einem Testkörper geschaffen werden.

Wenn auch die Markierung bevorzugt durch eine teilweise Austastung des die Abtastlinie definierenden Abtastlichtstrahls erfolgt, indem beispielsweise nur die eine Hälfte der Abtastlinie vom Abtastlichtfleck abgefahren wird, die andere nicht, so muß die Markierung aber auf jeden Fall so sein, daß die Richtung der Abtastlinie von der Bedienungsperson noch erkennbar ist, damit nach der Ausrichtung der markierten Stelle auf die am Testkörper vorgesehene Marke noch eine Winkelausrichtung zwischen der auf dem Testkörper befindlichen Markierungslinie und der Abtastlinie vorgenommen werden kann.

Nachdem derartige Linienabtastvorrichtungen im allgemeinen ohnehin um die drei Raumachsen verschwenkbar gelagert sind, da sie ja auch bisher schon justiert werden mußten, ist die einzige zusätzliche technische Maßnahme, die in der Linienabtastvorrichtung selbst vorzunehmen ist, die, daß der Abtastlichtstrahl in seiner Helligkeit so beeinflußt wird, daß eine bestimmte und wohldefinierte Stelle der Abtastlinie für die Bedienungsperson deutlich erkennbar markiert wird. Eine derartige Markierung, die vorzugsweise in einer teilweisen Austastung der Abtastlinie besteht, kann mit geringstem elektronischem Aufwand realisiert werden. Am Gerät selbst muß lediglich ein Justierschalter vorgesehen sein, mittels dessen die Linienabtastvorrichtung auf "Justieren" geschaltet werden kann.

Die Erfindung wird im folgenden beispielsweise anhand der Zeichnung beschrieben; in dieser zeigt
- Figur 1: eine schematische perspektivische Darstellung der Anordnung einer erfindungsgemäßen Linienabtastvorrichtung an einem mit Gepäckstücken bestückten Förderband
- Figur 2: eine analoge perspektivische Ansicht, wobei jedoch auf dem Förderband statt eines Gepäckstückes ein Testkörper angeordnet ist und die erfindungsgemäße Linienabtastvorrichtung noch nicht justiert ist, und
- Figur 3: eine zu Figur 2 analoge Ansicht bei justiertem Zustand der Linienabtastvorrichtung.

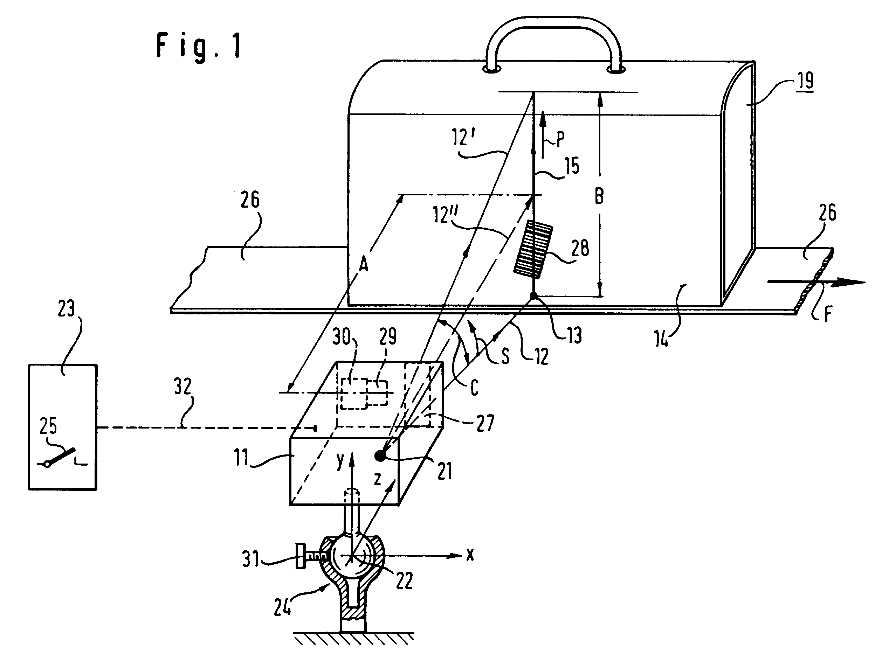

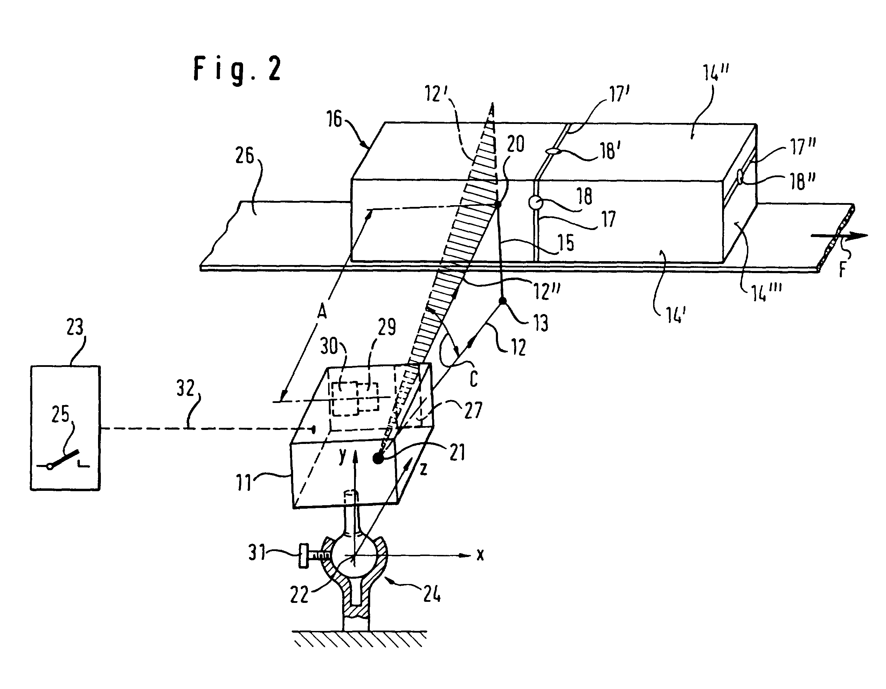

Nach Figur 1 ist neben einem Förderband 26 eine Linienabtastvorrichtung mit einem Gehäuse 11 angeordnet. Darin befindet sich eine nicht im einzelnen dargestellte Abtastlichtstrahl-Erzeugungsanordnung mit einer Lichtquelle, wie einem Laser, und einem Abtastmittel, wie einem Spiegelrad oder einem Dreh- oder Schwingspiegel, welche einen durch eine Frontöffnung 27 des Gehäuses 11 austretenden , eine V-förmige Abtastung über einen Abtastsektor C vornehmenden Abtastlichtstrahl 12 erzeugt, der seinen scheinbaren Ursprung 21 im Inneren des Gehäuses 11 hat. Die Öffnung 27 kann durch ein Fenster oder beispielsweise eine längliche Zylinderlinse verschlossen sein.

Der Abtastlichtstrahl 12 erzeugt auf der Abtastfläche 14 eines auf dem in Richtung des Pfeiles F bewegten Förderband 26 stehenden Gepäckstückes 19 einen Abtastlichtfleck 13, welcher aufgrund der sektorförmigen zyklischen Abtastbewegung S des Abtastlichtstrahls 12 eine gerade Abtastlinie 15 auf der Abtastfläche 14 in Richtung des Pfeiles P erzeugt.

Der Abtastlichtstrahl nimmt dabei zeitlich nacheinander alle Positionen zwischen einer Anfangsposition 12 und einer mit 12' bezeichneten Endposition ein.

Die so im Abstand A vom Gehäuse 11 erzeugte, senkrecht zum Abstand A und im vorliegenden Ausführungsbeispiel vertikal verlaufende Abtastlinie 15 hat eine definierte Länge B, die sich zumindest über die Höhe aller in Frage kommenden Gepäckstücke erstreckt.

Auf dem Gepäckstück 19 befindet sich ein Code-Aufkleber 28, der beim Transport des Gepäckstückes 19 quer zur Abtastlinie 15 vom Abtastlichtstrahl 12 mehrfach erfaßt wird und dessen Code-Balken unter einem deutlichen Winkel, der vorzugsweise bei 90° ± α liegen sollte (α hängt von der Codegeometrie ab), relativ zur Abtastlinie 15 verlaufen.

Im Gehäuse befindet sich auch ein nur schematisch angedeutetes Lichtempfangsteil 29, welches das vom Code aber auch von der Abtastfläche 14 insbesondere vom Code reflektierte Licht empfängt und ein entsprechendes elektrisches Signal an eine Auswerteschaltung 30 abgibt. Die Auswerteschaltung 30, die einen Mikroprozessor enthalten kann, wertet die Lesung aus und gibt an geeigneter Stelle ein Erkennungssignal aus.

Das Gehäuse 11 ist möglichst nahe dem scheinbaren Ursprung 21 der Abtastlichtstrahlen 12, 12' in einem Universalgelenk 24 gelagert, welches mittels einer Schraube 31 wahlweise lösbar und feststellbar ist. Durch Lösen der Schraube 31 kann das Gehäuse 11 um die Achsen x, y, z eines Koordinatensystems geschwenkt werden, dessen x-Achse im justierten Zustand nach Figur 1 senkrecht zur Abtastlinie 15 und parallel zur Förderrichtung und dessen z-Achse parallel zum mittleren Abtastlichtstrahl 12'' verläuft, der in der Mitte zwischen den an den Enden des V-Abtastsektorbereiches C liegenden Abtastlichtstrahlen 12, 12' liegt. Die y-Achse steht vertikal und senkrecht auf der horizontalen x-z-Ebene. Der Drehpunkt 22 des Universalgelenks 24 fällt mit dem Ursprung des Koordinatensystems x, y, z zusammen.

Figur 1 zeigt die justierte Sollposition des Gehäuses 11, in die es jedoch nach der Montage erst durch das erfindungsgemäße Justierverfahren gebracht werden muß, für dessen Ausführung eine Justierstufe 23 am oder im Gehäuse 11 vorgesehen ist.

Zur Justierung des Gehäuses 11 wird nach Figur 2 an derjenigen Stelle auf dem Förderband 26, wo die Gepäckstücke 19 an der Linienabtastvorrichtung mit dem Gehäuse 11 vorbeilaufen, ein quaderförmiger Testkörper 16 angeordnet, der eine in Transportrichtung F gesehen rechte ebene Testabtastfläche 14', eine obere ebene Testabtastfläche 14'' und eine vordere ebene Testabtastfläche 14''' aufweist. Auch die linke und hintere Fläche könnten als entsprechende Testabtastflächen ausgebildet sein.

Erfindungsgemäß weist der Testkörper 16 auf jeder Testabtastfläche 14', 14'', 14''' eine gerade Markierungslinie 17, 17' bzw. 17'' auf, welche sich an demjenigen Ort befindet, wo bei einwandfreier Justierung die Abtastlinie 15 erscheinen soll. An derjenigen Stelle der Markierungslinien 17, 17', 17'' auf dem Testkörper 16, wo der mittlere Abtaststrahl 12'' auftreffen soll, ist am Testkörper eine deutlich sichtbare Marke 18, 18' bzw. 18'' z. B. in Form eines kleinen Kreises angebracht.

Die Justierstufe 23, die der Anschaulichkeit halber außerhalb des Gehäuses 11 gezeigt ist, vorzugsweise aber sich innerhalb des Gehäuses 11 befindet, ist über eine Leitung 32 in nicht im einzelnen gezeigter Weise mit der Strahlerzeugungsvorrichtung innerhalb des Gehäuses 11 verbunden. Sie weist einen Justierschalter 25 mit zwei Stellungen "Justieren" bzw. "Abtastbetrieb" auf, der vorzugsweise so im oder am Gehäuse 11 angeordnet ist, daß er nur von einer befugten Person betätigbar ist.

Sofern sich der Justierschalter 25 in der Position "Justieren" befindet, wird gemäß Figur 2 der Abtastlichtstrahl beim Überstreichen der oberen Hälfte des Abtastsektors C dunkel getastet, so daß alle Abtaststrahlen oberhalb des mittleren Abtaststrahles 12'', so auch der in Figur 1 oberste Abtaststrahl 12' unterdrückt werden. Dieser Teil des Abtastsektors C ist in Figur schraffiert wiedergegeben. Der unterdrückte Abtaststrahl 12' und der nicht vom Abtastlichtfleck 13 überstrichene Teil der Abtastlinie 15 sind gestrichelt dargestellt.

In der unteren Hälfte des Abtastsektors C tastet die Justierstufe 23 den Abtaststrahl 12 hell, so daß die Abtastlinie 15 bis zur Mitte des Abtastsektors C vom Abtastlichtfleck 13 gezeichnet wird. Vom mittleren Abtastlichtstrahl 12'' ab bis zum Ende des Abtastsektors C wird dann aber die Abtastlinie 15 nicht weiter gezeichnet, weil ab hier der Abtastlichtfleck 13 bis zum oberen Ende des Abtastsektors C abgeschaltet ist. Auf diese Weise stellt das deutlich sichtbare Ende der Abtastlinie 15 im Bereich des mittleren Abtaststrahles 12'' eine markierte Stelle 20 dar, die zur Justierung der in Figur 2 noch unjustiert dargestellten Linienabtastvorrichtung in der folgenden Weise verwendet werden kann:

Nach Lockern der Schraube 31 wird das Gehäuse 11 zunächst um die x-Achse geschwenkt, bis die markierte Stelle 20 unmittelbar neben der Marke 18 auf der Markierungslinie 17 zu liegen kommt. Anschließend wird dann das Gehäuse 11 um die y-Achse nach rechts geschwenkt, bis die markierte Stelle 20 der Abtastlinie 15 mit der Marke 18 zur Deckung gekommen ist.

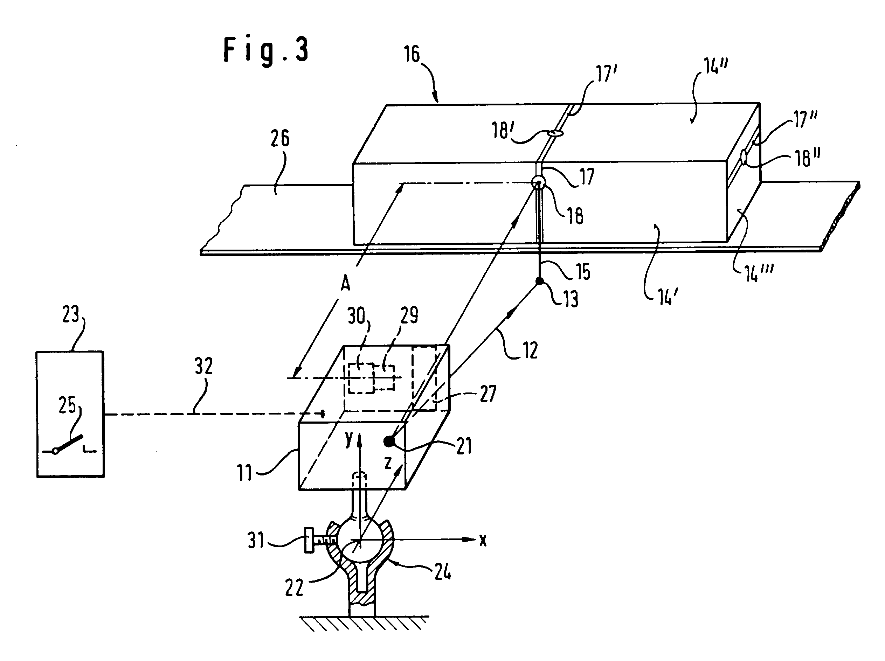

In diesem Zustand sind jedoch die Markierungslinie 17 und die Abtastlinie 15 noch nicht parallel zueinander. Nunmehr wird das Gehäuse 11 noch um die z-Achse solange geschwenkt, bis die Abtastlinie 15 und die Markierungslinie 17 zur Deckung kommen. Jetzt ist eine vollständige Justierung erzielt, und die erreichte Position des Gehäuses 11 wird durch Festziehen der Schraube 31 fixiert. Figur 3 zeigt die Lichtabtastvorrichtung mit dem Gehäuse 11 im einwandfrei justierten Zustand, so daß nunmehr der Testkörper 16 entfernt werden kann und nach Umlegen des Justierschalters 25 in die Position "Meßbetrieb" Gepäckstücke 19 (Figur 1) an der Lnienabtastvorrichtung vorbeigefördert werden können, um die darauf angebrachte Codierung zu erfassen und zu entschlüsseln.

Der Justierschalter 25 sollte von außen nicht ohne weiteres zugänglich sein, damit nach dem Justieren nicht Unbefugte diesen Schalter betätigen können. Entsprechendes gilt für die Fixierschraube 31.

Normalerweise bleibt die Justierung der Linienabtastvorrichtung nunmehr erhalten; ggf. kann jedoch bei Anordnung an anderer Stelle oder für den Fall eines anderen Justierproblems ohne weiteres eine Neujustierung in gleicher Weise wie vorstehend beschrieben vorgenommen werden.

Da Codierungen wie die Codierung 28 auf dem Gepäckstück 19 nach Figur 1 häufig an den unterschiedlichsten Stellen eines Gepäckstückes angeordnet sind, ist es im allgemeinen erforderlich, rund um das Förderband 26 mehrerer Linienabtastvorrichtungen mit einem Gehäuse 11 und einem Universalgelenk 24 anzuordnen. Zur Justierung derartiger weiterer Linienabtastvorrichtungen sind bei dem Testkörper nach Figur 2 die weiteren Testabtastflächen 14'', 14''' mit den Markierungslinien 17', 17'' und den Marken 18', 18'' vorgesehen.

Die exakte, reproduzierbare Ausrichtung von V-förmigen Laserabtastvorrichtungen, insbesondere bei räumlicher Anordnung mehrerer Scanner an einer Lesestelle wird also durch die Erfindung wesentlich vereinfacht, was auch der Lesesicherheit zugute kommt.

Je nachdem, mit welchen Anordnungen der Codierungen 28 zu rechnen ist, kann die Sollage des Gehäuses 11 auch anders sein als in Figur 1 und 2 gezeigt. Z. B. könnte das Gehäuse 11 auch zum die z-Achse um 90° gekippt angeordnet sein und die Markierungslinie 17 horizontal verlaufen, falls eine Horizontalabtastung statt der gezeigten Vertikalabtastung gewünscht ist. Auch Schrägabtastungen können durch entsprechende Anordnung des Gehäuses 11 und der Markierungslinie 17 realisiert werden.

## Patentansprüche

1. Verfahren zum Winkeljustieren einer um alle Raumachsen (x, y, z) einstellbaren Linienabtastvorrichtung mit einem Gehäuse (11), aus dem ein Abtastlichtstrahl (12) austritt, der auf eine in einem vorbestimmten Abstand (A) anzuordnende Abtastfläche (14) eines vorzugsweise am Gehäuse vorbeibewegten Gegenstandes (19) gerichtet ist und dort einen Lichtfleck (13) erzeugt, der eine Abtastlinie (15) auf der Abtastfläche (14) definiert, indem er über eine vorbestimmte Breite (B) periodisch entlang dieser bewegt wird, wobei vorzugsweise im Gehäuse auch ein Lichtempfänger (29) vorgesehen ist, der vom Gegenstand (19) reflektiertes Licht empfängt und ein elektrisches Signal an eine Auswerteschaltung (30) abgibt, die das Signal z.B. auf das Vorhandensein einer Codierung hin auswertet,
dadurch **gekennzeichnet,**
daß der Abtastlichtfleck (13) veranlaßt wird, wenigstens eine vorbestimmte Stelle (20) der Abtastlinie (15) zu markieren, daß ein` Testkörper (16) mit wenigstens einer Testabtastfläche (14', 14'', 14'''), auf dem sich eine der Abtastlinie (15) zuzuordnende Markierungslinie (17, 17', 17'') und eine der vorbestimmten Stelle (20) der Abtastlinie (15) zuzuordnende Marke (18, 18', 18'') befindet, an dem Ort angeordnet wird, wo später der Gegenstand (19) angeordnet oder vorbeibewegt wird, daß dann durch Verschwenken des Gehäuses (11) um wenigstens eine und vorzugsweise zwei Achsen (x, y) zunächst die markierte Stelle (20) der Abtastlinie (15) mit der Marke (18, 18', 18'') auf den Testkörper (16) in Deckung gebracht wird und daß anschließend durch Verschwenken des Gehäuses (11) um eine weitere Achse (z) die Abtastlinie (15) mit der Markierungslinie (17, 17', 17'') zur Deckung gebracht wird.

2. Verfahren nach Anspruch 1
dadurch **gekennzeichnet,**
daß die Markierung (20) der Abtastlinie (15) in einer erhöhten oder erniedrigten Helligkeit des Abtastlichtstrahls an einen bestimmten Punkt oder in einem Helligkeitssprung besteht.

3. Verfahren nach Anspruch 2
dadurch **gekennzeichnet,**
daß die markierte Stelle (20) sich zumindest im wesentlichen in der Mitte der Abtastlinie (15) befindet.

4. Nach einem der vorhergehenden Ansprüche
dadurch **gekennzeichnet,**
daß das Gehäuse (11) zunächst um senkrecht zu dem zur markierten Stelle (20) gerichteten Abtaststrahl (12'') verlaufende Achsen (x, y) verschwenkt wird, bis die markierte Stelle (20) mit der Marke (18) ausgerichtet ist, und daß dann eine Verschwenkung des Gehäuses (11) um eine Achse (z) erfolgt, die mit dem zur markierten Stelle (20) gerichteten Abtaststrahl (12'') zusammenfällt oder - vorzugsweise möglichst nahe dieser - parallel zu ihr verläuft.

5. Verfahren nach einem der vorhergehenden Ansprüche
dadurch **gekennzeichnet,**
daß mit einem mehrere Tastabtastflächen (14', 14'', 14''') aufweisenden Testkörper (16) gleichzeitig oder nacheinander mehrere Linienabtastvorrichtungen gemäß einen der vorangehenden Ansprüche justiert werden.

6. Verfahren nach einem der vorhergehenden Ansprüche
dadurch **gekennzeichnet,**
daß das Schwenkkoordinatensystem (x, y, z) seinen Ursprung (22) in einem Universaldrehpunkt (22) des Gehäuses (11) hat und die eine Achse (y) des Koordinatensystems parallel zur Markierungslinie (17, 17', 17'') verläuft.

7. Verfahren nach einem der vorhergehenden Ansprüche,
dadurch **gekennzeichnet,**
daß die Abtastlinie (15) dadurch markiert wird, daß ein Teil, vorzugsweise eine Hälfte der Abtastlinie (15) ausgetastet wird.

8. Justierbare, um alle Raumachsen (x, y, z) einstellbare Linienabtastvorrichtung mit einem Gehäuse (11), aus dem ein Abtastlichtstrahl (12) austritt, der auf eine in einem vorbestimmten Abstand (A) anzuordnende Abtastfläche (14) eines Gegenstandes (19) gerichtet ist und dort einen Lichtfleck (13) erzeugt, der eine Abtastlinie (15) auf der Abtastfläche (14) definiert, indem er über eine vorbestimmte Breite (B) periodisch entlang dieser bewegt wird, vorzugsweise im Gehäuse auch ein Lichtempfänger (29) vorgesehen ist, der vom Gegenstand (19) reflektiertes Licht empfängt und ein elektrisches Signal an eine Auswerteschaltung (30) abgibt, die das Signal z. B. auf das Vorhandensein einer Codierung hin auswertet, insbesondere zur Ausführung des Verfahrens nach einem der vorangehenden Ansprüche,
dadurch **gekennzeichnet,**
daß die Linienabtastvorrichtung eine Justierstufe (23) aufweist, welche zur Justierung aktivierbar ist und mit der der Abtaststrahl so beeinflußbar ist, daß er eine vorbestimmte Stelle (20) der Abtastlinie (15) markiert.

9. Vorrichtung nach Anspruch 8
dadurch **gekennzeichnet,**
daß die Markierungsstelle (20) in der Mitte der Abtastlinie (15) liegt.

10. Vorrichtung nach Anspruch 8 oder 9,
dadurch **gekennzeichnet,**
daß die Justierstufe (23) einen Teil, vorzugsweise eine Hälfte der Abtastlinie (15) austastet.

11. Vorrichtung nach einem der Ansprüche 8 bis 10,
dadurch **gekennzeichnet,**
daß sie wenigstens einen Testkörper (16) mit wenigstens einer Testabtastfläche (14', 14'', 14''') umfaßt, auf der eine der markierten Stelle (20) des Abtastlichtstrahls (12) zuzuordnende Marke (18, 18', 18'') und eine der Abtastlinie (15) zuzuordnende Markierungslinie (17, 17', 17'') vorgesehen ist.

12. Vorrichtung nach Anspruch 11,
dadurch **gekennzeichnet,**
daß der Testkörper (16) mehrere Testabtastflächen (14', 14'', 14''') und entsprechende Marken (18, 18', 18'') und Markierungslinien (17, 17', 17'') aufweist.

13. Vorrichtung nach Anspruch 11,
dadurch **gekennzeichnet,**
daß der Testkörper (16) ein Quader ist, von dessen Flächen wenigstens eine eine Testabtastfläche (14', 14'', 14''') ist.

14. Vorrichtung nach einem der Ansprüche 8 - 13,
dadurch **gekennzeichnet,**
daß das Gehäuse (11) möglichst nahe dem Ursprung (21) des Abtastlichtstrahls (12) in einem Universalgelenk (24) um die drei Raumachsen (x, y, z) verstellbar gelagert ist.

## Claims

1. Method for the angular adjustment of a linear scanning apparatus adjustable about all spatial axes (x, y, z) comprising a housing (11) from which a scanning light beam (12) emerges, which is directed onto a scanning surface (14) of an object (19), which is preferably moved past the housing, and generates a light bead (13) there, with the light beam defining a scanning line (15) on the scanning surface (14), in that it is periodically moved over a predetermined width (B) along the latter, wherein the scanning surface (14) is to be arranged at a predetermined distance (A) and wherein a light receiver (29) is also provided, preferably in the housing, which receives light reflected from the object (19) and transmits an electrical signal to an evaluation circuit (30) which evaluates the signal, for example with respect to the presence of a code, characterized in that the scanning light bead (13) is caused to mark at least one predetermined point (20) of the scanning line (15); in that a test body (16) with at least one test scanning surface (14', 14", 14"'), on which a marking line (17, 17', 17") to be associated with the scanning line (15) and a mark (18, 18', 18") to be associated with the predetermined point (20) of the scanning line (15) are located arranged at the location where the article (19) is later to be arranged or moved past; in that by pivoting the housing (11) about at least one and preferably two axes (x, y) the marked point (20) of the scanning line (15) is first brought into alignment with the mark (18, 18', 18") on the test body (16), and in that the scanning line (15) is subsequently brought into alignment with the marking line (17, 17', 17") by pivoting of the housing (11) about a further axis (z).

2. Method in accordance with claim 1, characterized in that the marking (20) of the scanning line (15) consists of an elevated or reduced brightness of the scanning light beam at a specific point or of a brightness step.

3. Method in accordance with claim 2, characterized in that the marked point (20) is located at least substantially at the center of the scanning line (15).

4. Method in accordance with one of the preceding claims, characterized in that the housing (11) is first pivoted about axes (x, y) extending perpendicular to the scanning beam (12") directed to the marked point (20) until the marked point (20) is aligned with the mark (18); and in that a pivoting of the housing (11) then takes place around an axis (z) which coincides with or extends parallel to, preferably as close as possible to, the scanning beam (12") directed to the marked point (20).

5. Method in accordance with one of the preceding claims, characterized in that with a test body (16) having a plurality of test scanning surfaces (14', 14", 14"') a plurality of linear scanning devices are adjusted simultaneously or one after the other in accordance with one of the preceding claims.

6. Method in accordance with one of the preceding claims, characterized in that the pivotal coordinate system (x, y, z) has its origin at a universal point of rotation (22) of the housing (11) and the one axis (y) of the coordinate system extends parallel to the marking line (17, 17', 17").

7. Method in accordance with one of the preceding claims, characterized in that the scanning line (15) is marked in that a part, preferably one half of the scanning line (15), is sensed.

8. Adjustable linear scanning device which can be adjusted about all spatial axes (x, y, z) comprising a housing (11) from which a scanning light beam emerges, which is directed onto a scanning surface (14) of an object (19) to be arranged at a predetermined distance (A), and generates a light bead (13) there, with the light bead defining a scanning line (15) on the scanning surface (14), in that it is periodically moved over a predetermined width (B) along the latter, wherein a light receiver (29) is also provided, preferably in the housing, which receives light reflected from the object (19) and transmits an electrical signal to an evaluation circuit (30) which evaluates the signal, for example with respect to the presence of a code, characterized in that the linear scanning device has an adjustment stage (23) which can be activated for the adjustment and with which the scanning beam can be so influenced that it marks a predetermined point (20) of the scanning line (15).

9. Apparatus in accordance with claim 8, characterized in that the marking point (20) lies at the center of the scanning line (15).

10. Apparatus in accordance with claim 8 or claim 9, characterized in that the adjustment stage (23) senses a part, preferably one half of the scanning line (15).

11. Apparatus in accordance with one of the claims 8 to 10, characterized in that it includes at least one test body (16) with at least one test scanning surface (14', 14", 14'") on which a mark (18, 18', 18") to be associated with the marked position (20) of the scanning light beam (12) and a marking line (17, 17', 17") to be associated with the scanning line (15) are provided.

12. Apparatus in accordance with claim 11, characterized in that the test body (16) has a plurality of test scanning surfaces (14', 14", 14'") and corresponding marks (18, 18', 18") and marking lines (17, 17', 17").

13. Apparatus in accordance with claim 11, characterized in that the test body (16) is a parallelepiped with at least one of its surfaces being a test scanning surface (14', 14", 14'").

14. Apparatus in accordance with of the claims 8 to 13, characterized in that the housing (11) is adjustably disposed about the three spatial axes (x, y, z) in a universal joint (24) as close as possible to the origin (21) of the scanning light beam (12).

## Revendications

1. Procédé pour l'ajustage angulaire d'un scanner de lignes réglable autour de tous les axes de l'espace (x, y, z) comportant un boîtier (11) d'où sort un rayon lumineux de balayage (12) qui est dirigé sur une surface de balayage (14) d'un objet (19) de préférence déplacé vis à vis du boîtier, laquelle surface de balayage doit être à une distance prédéterminée (A), et y produit une tache lumineuse (13) qui définit une ligne de balayage (15) sur la surface de balayage (14), attendu que ce rayon est déplacé périodiquement le long de celle-ci sur une largeur prédéterminée (B), un récepteur de lumière (29) étant également prévu de préférence dans le boîtier, récepteur qui reçoit la lumière réfléchie par l'objet (19) et délivre un signal électrique à un circuit d'évaluation (30), qui évalue le signal par exemple en se fondant sur la présence d'un code,
caractérisé par le fait que la tache lumineuse de balayage (13) est amenée à réaliser une marque en au moins un emplacement prédéterminé (20) de la ligne de balayage (15), qu'un corps solide de test (16) comportant au moins une surface de balayage de test (14', 14", 14"'), corps solide sur lequel se trouve une ligne de repérage (17, 17', 17") à associer à la ligne de balayage (15) et un repère (18, 18', 18") à associer à l'emplacement prédéterminé (20) de la ligne de balayage (15), est disposé à l'endroit où plus tard l'objet (19) sera disposé ou déplacé, qu'ensuite par pivotement du boîtier (11) autour d'au moins un et de préférence deux axes (x, y) l'emplacement marqué (20) de la ligne de balayage (15) est d'abord amené en superposition avec le repère (18, 18', 18") sur le corps solide de test (16), et qu'ensuite par pivotement du boîtier (11) autour d'un autre axe (z) la ligne de balayage (15) est amenée en superposition avec la ligne de repérage (17, 17', 17").

2. Procédé selon la revendication 1, caractérisé par le fait que la marque (20) de la ligne de balayage (15) consiste en une luminosité augmentée ou diminuée du rayon lumineux de balayage en un point déterminé ou consiste en un saut de luminosité.

3. Procédé selon la revendication 2, caractérisé par le fait que l'emplacement marqué (20) se trouve au moins essentiellement au milieu de la ligne de balayage (15).

4. Procédé selon l'une des revendications précédentes, caractérisé par le fait que le boîtier (11) est d'abord pivoté autour d'axes (x, y) s'étendant perpendiculairement au rayon de balayage (12") dirigé vers l'emplacement marqué (20), jusqu'à ce que l'emplacement marqué (20) soit centré sur le repère (18), et qu'ensuite a lieu un pivotement du boîtier (11) autour d'un axe (z) qui coïncide avec le rayon de balayage (12") dirigé vers l'emplacement marqué (20) ou qui s'étend parallèlement à lui - de préférence le plus près possible de celui-ci -.

5. Procédé selon l'une des revendications précédentes, caractérisé par le fait que plusieurs scanners de lignes sont ajustés simultanément ou l'un après l'autre , selon l'une des revendications précédentes, avec un corps solide de test (16) présentant plusieurs surfaces de balayage (14', 14", 14"').

6. Procédé selon l'une des revendications précédentes, caractérisé par le fait que le système de coordonnées de pivotement (x, y, z) a son origine (22) au centre (22) d'une rotule du boîtier (11) et que l'un des axes (y) du système de coordonnées s'étend parallèlement à la ligne de repérage (17, 17', 17").

7. Procédé selon l'une des revendications précédentes, caractérisé par le fait que la ligne de balayage (15) est marquée du fait qu'une partie, de préférence une moitié, de la ligne de balayage (15) est supprimée.

8. Scanner de lignes ajustable, réglable autour de tous les axes d'espace (x, y, z), comportant un boîtier (11) d'où sort un rayon lumineux de balayage (12), qui est dirigé sur une surface de balayage (14) d'un objet (19), laquelle surface doit être disposée à une distance (A) prédéterminée, et y produit une tache lumineuse (13), qui définit une ligne de balayage (15) sur la surface de balayage (14), attendu qu'il est déplacé périodiquement le long de celle-ci sur une largeur prédéterminée (B), un récepteur de lumière (29) étant prévu de préférence dans le boîtier, lequel récepteur reçoit la lumière réfléchie par l'objet (19) et délivre un signal électrique à un circuit d'évaluation (30), qui évalue le signal par exemple en se fondant sur la présence d'un code, en particulier pour la mise en oeuvre du procédé selon l'une des revendications précédentes,
caractérisé par le fait que le scanner de lignes comporte un étage d'ajustage (23), qui est rendu actif pour l'ajustage et par lequel le rayon de balayage peut être influencé de telle manière qu'il marque un emplacement prédéterminé (20) de la ligne de balayage (15).

9. Dispositif selon la revendication 8, caractérisé par le fait que l'emplacement de marque (20) se trouve au milieu de la ligne de balayage (15).

10. Dispositif selon la revendication 8 ou 9, caractérisé par le fait que l'étage d'ajustage (23) supprime une partie, de préférence une moitié, de la ligne de balayage (15).

11. Dispositif selon l'une des revendications 8 à 10, caractérisé par le fait qu'il comprend au moins un corps solide de test (16) avec au moins une surface de balayage de test (14', 14", 14"') sur laquelle sont prévus un repère (18, 18', 18") à associer à l'emplacement marqué (20) du rayon lumineux de balayage (12), et une ligne de repérage (17, 17', 17") à associer à une ligne de balayage (15).

12. Dispositif selon la revendication 11, caractérisé par le fait que le corps solide de test (16) présente plusieurs surfaces de balayage de test (14', 14", 14"') et les repères (18, 18', 18") et lignes de repérage (17, 17', 17") correspondants.

13. Dispositif selon la revendication 11, caractérisé par le fait que le corps solide de test (16) est un parallélépipède dont au moins une des faces est une surface de balayage de test (14', 14", 14"').

14. Dispositif selon l'une des revendications 8-13, caractérisé par le fait que le boîtier (11) est monté réglable autour des trois axes de l'espace (x, y, z) le plus près possible de l'origine (21) du rayon lumineux de balayage (12), sur une rotule (24).
